# EUROPÄISCHE PATENTSCHRIFT

(11) **EP 3 409 899 B1**
(45) Veröffentlichungstag und Bekanntmachung des Hinweises auf die Patenterteilung: **02.06.2021**
(21) Anmeldenummer: 18169807.7
(22) Anmeldetag: 27.04.2018
(51) Int. Cl.: F01D 11/00, F16J 15/44

(54) **DICHTUNGSANORDNUNG MIT ANGESCHWEISSTEM DICHTUNGSBLECH, STRÖMUNGSMASCHINE UND HERSTELLUNGSVERFAHREN**
SEALING ARRANGEMENT WITH A WELDED SEAL SHEET, TURBO-MACHINE AND PRODUCTION METHOD
DISPOSITIF DE JOINT D'ÉTANCHÉITÉ POURVU DE TÔLE D'ÉTANCHÉITÉ ASSEMBLÉE PAR SOUDAGE, TURBOMACHINE ET PROCÉDÉ DE FABRICATION

(30) Priorität: 02.06.2017 DE 102017209420
(43) Veröffentlichungstag der Anmeldung: 05.12.2018
(73) Patentinhaber: MTU Aero Engines AG, 80995 München (DE)
(72) Erfinder: Kislinger, Bernd, 85276 Reisgang (DE); Stanka, Rudolf, 84431 Rattenkirchen (DE); Schill, Manfred, 81827 München (DE); Feldmann, Manfred, 82223 Eichenau (DE)

(56) Entgegenhaltungen:
- EP-B1- 2 722 486
- US-A1- 2009 129 916
- US-A1- 2011 127 352

## Beschreibung

Die vorliegende Erfindung betrifft eine Dichtungsanordnung, eine Strömungsmaschine und ein Verfahren zur Herstellung einer Dichtungsanordnung.

Dichtungsanordnungen werden bei Strömungsmaschinen wie Flugzeugtriebwerken regelmäßig zur Abdichtung von Zwischenräumen zwischen rotierenden Triebwerkskomponenten und stationären Triebwerkskomponenten eingesetzt. Sie ermöglichen ein beschädigungsfreies Einlaufen von Schaufelspitzen, Dichtstegen und dergleichen und bewirken eine Reduzierung von Leckageströmungen.

Insbesondere werden Dichtungsanordnungen eingesetzt, die an einem Statorelement (insbesondere einer Leitschaufel) befestigt werden und eine Radialspaltabdichtung wie insbesondere ein Wabenelement umfassen, das mit einem rotorseitigen Dichtelement (z.B. einem Dichtfin) zusammenwirkt; die Bezeichnungen "radial" ebenso wie "axial" und "Umfangsrichtung" sowie davon abgeleitete Begriffe sind in dieser Schrift - sofern nichts anderes angegeben ist - in Bezug auf eine (vorgesehene) Rotationsachse des Rotors zu verstehen.

Die Druckschrift DE 10 2012 201 050 A1 offenbart eine Dichtungsanordnung mit einem zwei Ringe mit jeweils U-förmigem Blechprofil umfassenden Träger zur Anbindung an einen Statorabschnitt. Die Ringe weisen insbesondere jeweils einen Innenflansch zur Befestigung einer Vielzahl von Grundkörpern auf, die der Aufnahme eines Wabenelements dienen. Die äußeren Schenkel der Ringe dienen der Stabilisierung des Trägers.

Die Fertigung der Blechringe erfordert eine Vielzahl an Segmenten, die in Umfangsrichtung hintereinander angeordnet werden müssen. Die Herstellung einer derartigen Dichtungsanordnung ist daher aufwendig.

Aus der EP 2 722 486 B1 ist eine Fischmaul-Dichtungsanordnung mit zwei Halbschalenelementen bekannt, die im Bereich einer Honigwabendichtung auf Stoß stoffschlüssig miteinander verbunden sind. Die Halbschalenelemente sind dabei jeweils einteilig mit einem radial weiter außen liegenden Dichtungselement ausgebildet, das als Deflektor der Fischmauldichtung fungiert.

Weitere Dichtungsanordnungen sind aus den Dokumenten US20110127352A1, EP2722486B1 und US20090129916A1 bekannt.

Die Realisierung einer stabilen stoffschlüssigen Verbindung der Halbschalenelemente miteinander im vibrationsintensiven Bereich der Wabendichtung ist jedoch ebenso wie die Fertigung der einteilig mit den außen liegenden Dichtungselementen ausgebildeten Halbschalenelemente aufwendig.

Die vorliegende Erfindung hat die Aufgabe, eine alternative Technik bereitzustellen, die insbesondere eine vereinfachte Fertigung einer Dichtungsanordnung sowie eine Masseeinsparung ermöglicht.

Die Aufgabe wird gelöst durch eine Dichtungsanordnung gemäß Anspruch 1, eine Strömungsmaschine nach Anspruch 9 und ein Verfahren zur Herstellung einer Dichtungsanordnung gemäß Anspruch 10. Vorteilhafte Ausführungsformen sind in den Unteransprüchen, der Beschreibung und den Figuren offenbart.

Eine erfindungsgemäße Dichtungsanordnung für eine Strömungsmaschine umfasst einen als Ringteil (also als ein einen Ringsektor ausbildendes Element, beispielsweise als Halbring mit einem Mittelachsenwinkel von 180° oder als Vollring mit einem Mittelachsenwinkel von 360°, der also eine zentrale Mittelachse (die vorzugsweise mit einer vorgesehenen Rotorachse der Strömungsmaschine übereinstimmt) ganz umläuft) ausgebildeten Träger. Dieser weist einen Befestigungsabschnitt auf, an dem die Dichtungsanordnung an einem Statorteil (beispielsweise einem Abschnitt einer Leitschaufel, insbesondere einer radial inneren Leitschaufelspitze bzw. einer radial inneren Leitschaufelplattform) befestigt werden kann; der Träger kann beispielsweise im Befestigungsabschnitt eine in Umfangsrichtung verlaufende, radial von außen nach innen in den Träger hineinragende Nut ausbilden oder eine Mehrzahl an radial im Träger verlaufenden Aufnahmen aufweisen, in die ein Abschnitt des Statorteils jeweils eingesetzt werden kann. Gemäß einer vorteilhaften Ausführungsform weisen der Abschnitt des Statorteils und der Träger einander entsprechende Bohrungen in axialer Richtung derart auf, dass das Statorteil mittels eines Bolzens, der durch die Bohrungen im Träger und die Bohrungen im Statorteil gesteckt ist oder werden kann, fixiert werden kann.

Der Träger einer erfindungsgemäßen Dichtungsanordnung weist weiterhin einen Halterungsbereich auf, der dazu eingerichtet ist, eine Radialspaltabdichtung (wie beispielsweise ein Wabendichtungselement) zur Abdichtung eines Radialspaltes zwischen dem Rotor und dem Stator der Strömungsmaschine (beispielsweise mittels einer Lötverbindung) zu haltern; gemäß einer vorteilhaften Ausführungsform umfasst die Dichtungsanordnung eine an dem Halterungsbereich befestigte, beispielsweise angelötete Radialspaltabdichtung.

Eine erfindungsgemäße Dichtungsanordnung umfasst ferner ein vom Träger in axialer Richtung abstehendes, ringförmig ausgebildetes Dichtungsblech, das radial außerhalb des Halterungsbereichs (für die Radialspaltabdichtung) an den Träger angeschweißt ist. Insbesondere weist die Dichtungsanordnung also eine entsprechende Schweißnaht zwischen einem Rand des Dichtungsblechs und dem Träger auf.

Das Dichtungsblech, das vorzugsweise vom Halterungsbereich in radialer Richtung beabstandet ist, ist damit dazu eingerichtet, im Ringraum der Strömungsmaschine (beispielsweise mit einer radial inneren Leitschaufelplattform und/oder mindestens einem Vorsprung an einer benachbarten Laufschaufelreihe zusammen) Strömungen umzulenken und abzubremsen und so insgesamt als Dichtung zu wirken und Leckagen zu reduzieren.

Vorzugsweise ist das Dichtungsblech als ein Streifen mit einer sich in axialer Richtung (die eine Breite des Streifens darstellt) erstreckenden Oberfläche ausgebildet, der die zentrale Achse des Ringteils (also die vorgesehene Rotorachse) ganz oder teilweise umläuft. Insbesondere kann das Dichtungsblech in axialer Richtung vorzugsweise mindestens 10mm oder mindestens 12mm vom Träger abstehen und/oder höchstens 15mm oder höchstens 13mm (so dass also ein dem angeschweißten Rand (und damit der Schweißnaht) entgegengesetzter Rand des Dichtungsblechs einen entsprechenden minimalen bzw. maximalen axialen Abstand vom Träger hat). Gemäß einer vorteilhaften Ausführungsform beträgt der Abstand eines der Schweißnaht entgegengesetzten Randes des Dichtungsblechs vom Träger mindestens 90% einer axialen Ausdehnung des Halterungsbereichs in dieselbe Richtung. Insbesondere kann das Dichtungsblech in axialer Richtung über einen (radial weiter innen liegenden) Rand des Halterungsbereichs hinausragen.

Ein radialer Abstand des Dichtungsblechs vom Halterungsbereich beträgt vorzugsweise mindestens 75%, bevorzugter mindestens 85% (und/oder höchstens 125% oder höchstens 115%) des Abstandes eines der Schweißnaht entgegengesetzten Randes des Dichtungsblechs von der Schweißnaht (also der in axialer Richtung gemessenen Breite des Dichtungsblechs).

Der Träger ist vorzugsweise monolithisch ausgebildet. Erfindungsgemäß ist der Träger als Drehteil ausgebildet, ist also mittels (spanabhebenden) Drehens gefertigt. Dies ermöglicht eine einerseits besonders einfache, andererseits solide Ausführung des Trägers.

Vorzugsweise ist der Träger als ein Ring ausgebildet, der eine zentrale Mittelachse vollständig entlang einer Kreisbahn umläuft.

Eine erfindungsgemäße Strömungsmaschine umfasst eine erfindungsgemäße Dichtungsanordnung gemäß einer der in dieser Schrift offenbarten Ausführungsformen sowie mindestens ein am Befestigungsabschnitt des Trägers der Dichtungsanordnung befestigtes Statorteil.

Ein erfindungsgemäßes Verfahren dient der Herstellung einer erfindungsgemäßen Dichtungsanordnung gemäß einer der in dieser Schrift offenbarten Ausführungsformen. Es umfasst ein Fertigen des (vorzugsweise monolithischen) Trägers (mit einem Befestigungsabschnitt für ein Statorteil und einem Halterungsbereich für eine Radialspaltabdichtung) und ein Anschweißen mindestens eines Dichtungsblechs (an dessen einem Rand) an den Träger, und zwar radial weiter außen als der Halterungsbereich und so, dass das Dichtungsblech in axialer Richtung vom Träger absteht; das Fertigen des Trägers erfolgt mittels (spanabhebenden) Drehens. Das Dichtungsblech kann zunächst als ebener Blechstreifen gefertigt und dann in Umfangsrichtung gebogen werden, ehe es an den Träger angeschweißt wird.

Eine erfindungsgemäße Dichtungsanordnung, eine erfindungsgemäße Strömungsmaschine, ein erfindungsgemäßer Träger und ein erfindungsgemäßes Verfahren ermöglichen aufgrund des mittels Anschweißen (nachträglich) am Träger befestigten bzw. zu befestigenden Dichtungsblechs zum einen eine einfache Fertigung des Trägers, der damit zudem stabil ausgebildet und beispielsweise als Einzelteil unproblematisch transportiert und gelagert werden kann. Zum anderen erlaubt das Anschweißen eine Ausbildung eines besonders dünnen Dichtungsblechs, was in der Strömungsmaschine eine Gewichtsersparnis bedeutet, die insbesondere den Treibstoffverbrauch mindert.

Besonders bevorzugt ist eine Ausführungsform der vorliegenden Erfindung, bei der zwei Dichtungsbleche an in axialer Richtung entgegengesetzten Seiten des Trägers angeschweißt sind bzw. werden. Eines der Dichtungsbleche steht dann entsprechend entgegen einer vorgesehenen Hauptstromrichtung vom Träger ab und das andere mit der vorgesehenen Hauptstromrichtung. Eine derartige Dichtungsanordnung ermöglicht besonders effektive Umlenkungen radialer Strömungen und bietet dabei die genannten Vorteile bei der Fertigung und Lagerung.

Die beiden Dichtungsbleche können im Wesentlichen symmetrisch oder asymmetrisch zum Träger ausgebildet bzw. angeschweißt sein oder werden. Insbesondere können die Dichtungsbleche beide in im Wesentlichen demselben oder in voneinander verschiedenem Abstand zum Halterungsbereich bzw. zur zentralen Achse des als Ringteil ausgebildeten Trägers (die vorzugsweise mit der vorgesehenen oder vorhandenen Rotorachse übereinstimmt) angeschweißt sein oder werden.

Das Dichtungsblech bzw. genau eines oder beide der Dichtungsbleche kann/können (jeweils) einen Abschnitt aufweisen, in dem es/sie nach radial innen gebogen ist/sind. Insbesondere kann/können das Dichtungsblech bzw. eines oder beide der Dichtungsbleche einen dem angeschweißten Rand entgegengesetzten Rand (also einen am weitesten axial vom Träger abstehenden Rand) aufweisen, der nach radial innen gebogen, also einer zentralen Achse des als Ringteil ausgebildeten Trägers zugewandt ist. Ein derartiger Abschnitt bzw. Rand, der vor dem Anschweißen umgebogen worden sein bzw. werden kann, ermöglicht eine besonders vorteilhafte Beeinflussung von radialen Strömungen.

Vorteilhaft ist eine Ausführungsform, bei der das Dichtungsblech bzw. eines oder beide der Dichtungsbleche eine (in radialer Richtung gemessene) mittlere Dicke aufweist/aufweisen, die höchstens 1,5mm oder höchstens 1mm beträgt und/oder die mindestens 0,5mm oder mindestens 0,6mm beträgt. Auf diese Weise kann eine besonders hohe Gewichtseinsparung bewirkt werden bzw. kann eine nötige Stabilität (gleichwohl) gewährleistet werden.

Der Befestigungsabschnitt des Trägers kann einen Ringbereich (mit einer sich in radialer Richtung erstreckenden Oberfläche) umfassen, der dazu eingerichtet ist, einseitig an einem ersten Oberflächenbereich des Statorteils anzuliegen, während ein dem Oberflächenbereich axial gegenüberliegender zweiter Oberflächenbereich des Statorteils freiliegt. In diesem Fall zeigt also ein Meridianschnitt der Dichtungsanordnung im Bereich des Ringbereichs eine asymmetrische Ausbildung des Befestigungsabschnittes. Die Einseitigkeit der (eine axiale Sicherung bewirkenden) Abstützung erleichtert das Einsetzen des Statorteils in den Befestigungsabschnitt und bedeutet eine Gewichtseinsparung. Insbesondere ist der Ringbereich vorzugsweise Teil des monolithisch ausgebildeten Trägers. Vorzugsweise weist der Ringbereich einen Oberflächenabschnitt auf, der radial weiter außen liegt als ein (vorzugsweise an derselben Seite des Trägers) angeschweißtes Dichtungsblech.

Das Dichtungsblech kann aufgesetzt auf einen im Wesentlichen ebenen Oberflächenbereich des Trägers angeschweißt sein bzw. werden, so dass also der Träger sich in radialer Richtung über eine entsprechenden Schweißnaht hinaus erstreckt. Alternativ kann das Dichtungsblech an einen radial außen angeordneten Rand des Trägers angesetzt und dort angeschweißt sein oder werden, oder es kann (vorzugsweise stumpf (also auf Stoß)) an eine in axialer Richtung aus einer Trägeroberfläche hervorstehende Kante angesetzt und dort angeschweißt sein oder werden. Eine derartige Kante kann in axialer Richtung beispielsweise mindestens 2,5mm oder mindestens 3mm aus der Trägeroberfläche hervorstehen und/oder höchstens 4,8mm, bevorzugter höchstens 4,1mm. In Ausführungsformen mit zwei an entgegengesetzten Seiten des Trägers angeschweißten Dichtungsblechen kann ein erstes der Dichtungsbleche auf eine erste der genannten Weisen auf- bzw. angesetzt angeschweißt und ein zweites auf eine zweite, von der ersten verschiedene der genannten Arten, oder es können beide Dichtungsbleche gleichartig auf- bzw. angesetzt am Träger angeschweißt sein bzw. werden.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: einen Schnittbereich eines Meridianschnitts durch eine exemplarische erfindungsgemäße Dichtungsanordnung; und
- Figur 2:: einen Abschnitt einer erfindungsgemäßen Strömungsmaschine mit der in der Figur 1 dargestellten Dichtungsanordnung im Meridianschnitt.

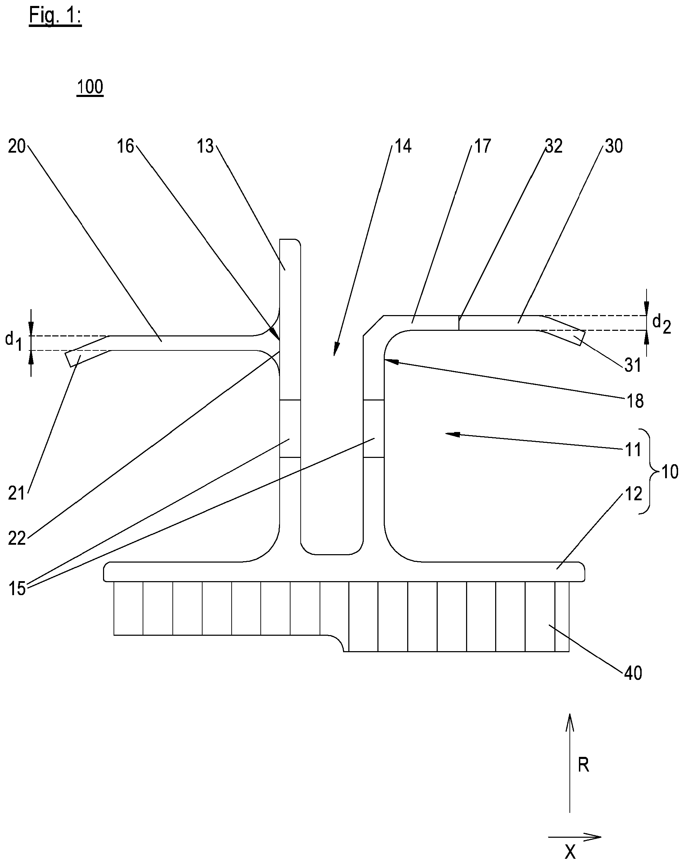

In der Figur 1 ist ein Schnittbereich eines Meridianschnitts durch eine Ausführungsform einer erfindungsgemäßen Dichtungsanordnung 100 entlang einer vorgesehenen, in Axialrichtung X verlaufenden Rotorachse dargestellt. Es versteht sich, dass der vollständige Meridianschnitt im Fall, dass die Dichtungsanordnung einen Vollring ausbildet, einen (bezogen auf die Rotorachse) gegenüberliegenden, zweiten Schnittbereich aufweist; ein solcher ist vorzugsweise analog ausgebildet.

Die Dichtungsanordnung 100 umfasst einen (vorzugsweise monolithischen) Träger 10, der einen Befestigungsabschnitt 11 und einen Halterungsbereich 12 umfasst. Der Träger 10 ist als Ringteil ausgebildet (in der Figur nicht erkennbar) und umläuft als solches ganz oder teilweise eine zentrale Achse, die mit der vorgesehenen Rotorachse übereinstimmt. Vorzugsweise ist der Träger als Drehteil ausgebildet, also mittels spanabhebenden Drehens gefertigt.

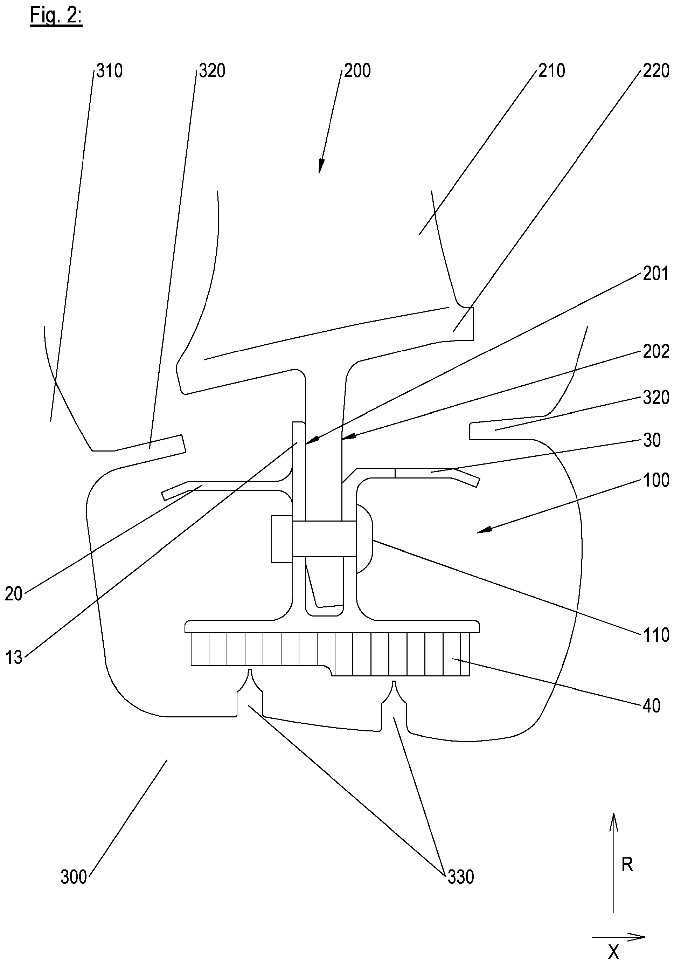

Der Befestigungsabschnitt 11 ist dazu eingerichtet, an einem Statorteil wie beispielsweise einem Abschnitt einer Leitschaufel befestigt zu werden. Er umfasst eine Ringnut 14, die radial von außen nach innen in den Träger hineinragt und in die das Statorteil eingesteckt werden kann. Die beiden Seitenwände der Ringnut sind von einer Bohrung 15 durchzogen. Vorzugsweise weist ein einzusetzendes oder eingesetztes Statorteil an der entsprechenden Stelle ebenfalls eine Bohrung auf, so dass - wie in der Figur 2 gezeigt - ein Bolzen 110 durch die Seitenwände der Ringnut und das Statorteil 200 geführt werden kann, um letzteres in der Ringnut 14 zu fixieren. Der Bolzen 110 kann in dieser Position beispielsweise vernietet oder verschraubt sein bzw. werden.

Die beiden Seitenwände der Ringnut 14 erstrecken sich unterschiedlich weit in radialer Richtung R: So ist an einer der Seitenwände ein Ringbereich 13 ausgebildet, der - wie wiederum in der Figur 2 erkennbar - dazu eingerichtet ist, einseitig an einem ersten Oberflächenbereich 201 eines eingesetzten Statorteils 200 anzuliegen, während ein dem Oberflächenbereich 201 axial gegenüberliegender zweiter Oberflächenbereich 202 des Statorteils freiliegt.

Der Halterungsbereich 12 ist radial innerhalb des Befestigungsabschnitts 11 (also bezogen auf die radiale Richtung R weiter innen als der Befestigungsabschnitt) angeordnet. Er haltert eine Radialspaltabdichtung 40, die zur Abdichtung eines Radialspaltes zwischen Stator und Rotor vorgesehen ist. Im dargestellten Beispiel ist die Radialspaltabdichtung 40 als eine Wabendichtung ausgebildet, die an dem Halterungsbereich 12 des Trägers 10 beispielsweise angelötet sein kann (vorzugsweise im Vakuum).

Die Dichtungsanordnung 100 weist zudem zwei Dichtungsbleche 20, 30 auf, die radial außerhalb des Halterungsbereichs 12 und von diesem beabstandet an den Träger 10 angeschweißt sind, so dass die Dichtungsanordnung entsprechende Schweißnahten 22, 32 aufweist. Die Dichtungsbleche stehen vom Träger 10 in axialer Richtung X an zueinander entgegengesetzten Seiten ab. An ihren der jeweiligen Schweißnaht 22, 32 entgegengesetzten, axial jeweils am weitesten vom Träger entfernten Rändern 21, 31 sind die Dichtungsbleche jeweils nach radial innen gebogen. Dadurch können radiale Strömungen vorteilhaft nach innen umgelenkt werden und insgesamt damit Leckagen vermindert werden.

Die Dichtungsbleche 20, 30 weisen jeweils eine mittlere Dicke d₁ bzw. d₂ auf, die vorzugsweise jeweils höchstens 1,5mm oder höchstens 1mm beträgt und/oder mindestens 0,5mm oder mindestens 0,6mm. Die Dicken d₁ und d₂ der beiden Dichtungsbleche 20, 30 können gleich groß oder verschieden groß sein.

Im dargestellten Ausführungsbeispiel ist das Dichtungsblech 20 radial weiter innen angeschweißt als das zweite Dichtungsblech 30. Insbesondere ist das Dichtungsblech 20 auf einen ebenen Oberflächenbereich 16 des Trägers 10 aufgesetzt und dort angeschweißt, so dass sich der Träger 10 nach radial außen über die Schweißnaht 22 hinaus erstreckt. Dort bildet er im gezeigten Ausführungsbeispiel den Ringbereich 13 aus.

Das Dichtungsblech 30 hingegen ist an eine in axialer Richtung X aus der Trägeroberfläche 10 hervorstehende Kante 17 angesetzt und dort angeschweißt und steht somit zum ersten Dichtungsblech 20 in entgegengesetzter Richtung vom Träger 10 ab. Eine Ausdehnung der Kante 17 in axialer Richtung von der Trägeroberfläche 18 beträgt vorzugsweise mindestens 2,5mm oder mindestens 3mm und/oder höchstens 4,8mm, bevorzugter höchstens 4,1mm.

In Figur 2 ist die Dichtungsanordnung 100 im Inneren einer Strömungsmaschine gezeigt: Sie ist dabei wie oben beschrieben an einem Statorteil 200 in Form einer Leitschaufel befestigt, die ein Leitschaufelblatt 210 und eine Plattform 220 umfasst. Ein Rotor 300 weist Dichtfins 330 auf, die dazu eingerichtet sind, in die Radialspaltabdichtung 40 der Dichtungsanordnung einzulaufen und mit dieser zusammen den Radialspalt zwischen dem Rotor 300 und dem Statorteil 200 abzudichten. Es versteht sich, dass der Rotor 300 aus mehreren Einzelteilen zusammengesetzt sein kann (nicht dargestellt).

Auftretende radiale Strömungen werden durch die Dichtungsbleche 20, 30 der Dichtungsanordnung 100 zusammen mit Vorsprüngen 320 an den zu der Leitschaufel 200 benachbarten Laufschaufeln 310 sowie mit der Plattform 220 der Leitschaufel 200 umgelenkt und dadurch gebremst, so dass Leckagen reduziert werden.

Offenbart ist eine Dichtungsanordnung 100 für eine Strömungsmaschine, die einen als Ringteil ausgebildeten Träger 10 und ein ringartig ausgebildetes, in axialer Richtung X vom Träger abstehendes Dichtungsblech 20, 30 umfasst. Der Träger weist einen Befestigungsabschnitt 11 zur Befestigung der Dichtungsanordnung an einem Statorteil 200 und einen radial innerhalb des Befestigungsabschnittes angeordneten Halterungsbereich 12 zur Halterung einer Radialspaltabdichtung 40 auf. Das Dichtungsblech 20, 30 ist radial außerhalb des Halterungsbereichs 12 an den Träger 10 angeschweißt.

Offenbart sind ferner eine Strömungsmaschine mit einer Dichtungsanordnung 100, ein Träger 10 für eine Dichtungsanordnung und ein Verfahren zum Herstellen einer Dichtungsanordnung.

### Bezugszeichen:

- 10: Träger
- 11: Befestigungsabschnitt
- 12: Halterungsbereich
- 13: Ringbereich
- 14: Ringnut
- 15: Bohrung
- 16: Oberflächenbereich des Trägers
- 17: aus der Trägeroberfläche 18 hervorstehende Kante
- 18: Trägeroberfläche

- 20, 30: Dichtungsblech
- 21, 31: Rand des Dichtungsblechs
- 22, 32: Schweißnaht

- 40: Radialspaltabdichtung

- 100: Dichtungsanordnung
- 110: Bolzen

- 200: Statorteil (in Form einer Leitschaufel)
- 201, 202: Oberflächenbereich des Statorteils
- 210: Leitschaufelblatt
- 220: Plattform

- 300: Rotor
- 310: Laufschaufel
- 320: Vorsprung der Laufschaufelreihe
- 330: Dichtfin

- d₁, d₂: mittlere Dicke des Dichtungsblechs 20, 30
- R: radiale Richtung
- X: axiale Richtung

## Patentansprüche

1. Dichtungsanordnung (100) für eine Strömungsmaschine, wobei die Dichtungsanordnung umfasst:
- einen als Ringteil ausgebildeten Träger (10) mit einem Befestigungsabschnitt (11) zur Befestigung der Dichtungsanordnung an einem Statorteil (200) und einem radial innerhalb des Befestigungsabschnittes angeordneten Halterungsbereich (12) zur Halterung einer Radialspaltabdichtung (40); und
- ein ringartig ausgebildetes, in axialer Richtung (X) vom Träger (10) abstehendes Dichtungsblech (20, 30), das radial außerhalb des Halterungsbereichs (12) an den Träger (10) angeschweißt ist, **dadurch gekennzeichnet, dass** der Träger als Drehteil ausgebildet ist.

2. Dichtungsanordnung gemäß Anspruch 1, wobei ein in axialer Richtung am weitesten vom Träger abstehender Rand (21, 31) des Dichtungsblechs nach radial innen gebogen ist.

3. Dichtungsanordnung gemäß einem der vorhergehenden Ansprüche, wobei eine mittlere Dicke (d₁, d₂) des Dichtungsblechs höchstens 1,5mm oder höchstens 1mm beträgt und/oder mindestens 0,5mm oder mindestens 0,6mm.

4. Dichtungsanordnung gemäß einem der vorhergehenden Ansprüche, wobei der Befestigungsabschnitt (11) einen Ringbereich (13) umfasst, der dazu eingerichtet ist, einseitig an einem ersten Oberflächenbereich (201) des Statorteils (200) anzuliegen, während ein dem ersten Oberflächenbereich (201) axial gegenüberliegender zweiter Oberflächenbereich (202) des Statorteils freiliegt.

5. Dichtungsanordnung gemäß Anspruch 4, wobei der Ringbereich (13) einen Oberflächenabschnitt aufweist, der sich radial außerhalb des Dichtungsblechs (20) in radialer Richtung (R) erstreckt.

6. Dichtungsanordnung gemäß einem der vorhergehenden Ansprüche, wobei das Dichtungsblech ein erstes Dichtungsblech (20) ist und die Dichtungsanordnung mindestens ein zweites ringartig ausgebildetes, am Träger (10) angeschweißtes Dichtungsblech (30) umfasst, das in zum ersten Dichtungsblech entgegengesetzter axialer Richtung vom Träger absteht.

7. Dichtungsanordnung nach Anspruch 6, wobei das erste und das zweite Dichtungsblech in im Wesentlichen dem gleichen Abstand oder in unterschiedlichem Abstand zu einer zentralen Achse des Trägers (10) angeschweißt sind.

8. Dichtungsanordnung gemäß einem der vorhergehenden Ansprüche, wobei ein Rand des Dichtungsblechs (20, 30) bzw. des ersten und/oder des zweiten Dichtungsblechs
- aufgesetzt auf einen im Wesentlichen ebenen Oberflächenbereich (16) des Trägers,
- angesetzt an einen radial außen angeordneten Rand des Trägers oder
- stumpf angesetzt an eine in axialer Richtung (X) aus einer Trägeroberfläche (18) hervorstehende Kante (17) angeschweißt ist.

9. Strömungsmaschine mit einer Dichtungsanordnung (100) gemäß einem der vorhergehenden Ansprüche sowie mindestens einem am Befestigungsabschnitt (11) des Trägers (10) der Dichtungsanordnung befestigten Statorteil (200).

10. Verfahren zum Herstellen einer Dichtungsanordnung (100) gemäß einem der Ansprüche 1 bis 8, das umfasst:
- fertigen des einen Befestigungsabschnitt (11) für ein Statorteil und einen Halterungsbereich (12) für eine Radialspaltabdichtung (40) umfassenden Trägers (10), wobei das Fertigen des Trägers (10) mittels Drehen erfolgt, und
- anschweißen des Dichtungsblechs (20, 30) bzw. der Dichtungsbleche radial außerhalb des Halterungsbereichs (12) an den Träger, so dass das/die Dichtungsblech/e, in axialer Richtung (X) vom Träger (10) absteht/abstehen.

## Claims

1. Sealing arrangement (100) for a turbomachine, the sealing arrangement comprising:
- a carrier (10) designed as an annular part, having a fastening portion (11) for fastening the sealing arrangement to a stator part (200) and a holding region (12), arranged radially inside the fastening portion, for holding a radial gap seal (40); and
- an annular sealing plate (20, 30) which protrudes in the axial direction (X) from the carrier (10) and is welded to the carrier (10) radially outside the holding region (12), **characterized in that** the carrier is designed as a turned part.

2. Sealing arrangement according to claim 1, wherein an edge (21, 31) of the sealing plate protruding farthest from the carrier in the axial direction is bent radially inward.

3. Sealing arrangement according to either of the preceding claims, wherein an average thickness (d₁, d₂) of the sealing plate is at most 1.5 mm or at most 1 mm and/or at least 0.5 mm or at least 0.6 mm.

4. Sealing arrangement according to any of the preceding claims, wherein the fastening portion (11) comprises an annular region (13) which is designed to rest on one side against a first surface region (201) of the stator part (200), while a second surface region (202), axially opposite the first surface region (201), of the stator part is exposed.

5. Sealing arrangement according to claim 4, wherein the annular region (13) has a surface portion which extends radially outside the sealing plate (20) in the radial direction (R).

6. Sealing arrangement according to any of the preceding claims, wherein the sealing plate is a first sealing plate (20) and the sealing arrangement comprises at least one second annular sealing plate (30) which is welded to the carrier (10) and protrudes from the carrier in the axial direction opposite to the first sealing plate.

7. Sealing arrangement according to claim 6, wherein the first and second sealing plates are welded at substantially the same distance or at a different distance from a central axis of the carrier (10).

8. Sealing arrangement according to any of the preceding claims, wherein an edge of the sealing plate (20, 30) or of the first and/or second sealing plate is welded so as to be
- placed on a substantially flat surface region (16) of the carrier,
- attached to a radially outer edge of the carrier or
- attached with a butt joint to an edge (17) protruding in the axial direction (X) from a carrier surface (18).

9. Turbomachine having a sealing arrangement (100) according to any of the preceding claims and at least one stator part (200) fastened to the fastening portion (11) of the carrier (10) of the sealing arrangement.

10. Method for producing a sealing arrangement (100) according to any of claims 1 to 8, which comprises:
- manufacturing the carrier (10) comprising a fastening portion (11) for a stator part and a holding region (12) for a radial gap seal (40), wherein the carrier(10) is manufactured by turning, and
- welding the sealing plate (20, 30) or the sealing plates to the carrier radially outside the holding region (12), such that the sealing plate(s) protrude(s) from the carrier (10) in the axial direction (X).

## Revendications

1. Agencement d'étanchéité (100) destiné à une turbomachine, l'agencement d'étanchéité comprenant :
- un support (10) conçu sous la forme d'une partie annulaire et comportant une section de fixation (11) destinée à fixer l'agencement d'étanchéité à une partie de stator (200) et une zone de maintien (12) disposée radialement à l'intérieur de la section de fixation pour maintenir un joint d'étanchéité de fente radiale (40) ; et
- une plaque d'étanchéité en forme d'anneau (20, 30), laquelle dépasse du support (10) dans la direction axiale (X) et est soudée au support(10) radialement à l'extérieur de la zone de maintien (12), **caractérisé en ce que** le support est conçu sous la forme d'une partie tournante.

2. Agencement d'étanchéité selon la revendication 1, dans lequel un bord (21, 31) de la plaque d'étanchéité dépassant le plus loin du support dans la direction axiale est courbé radialement vers l'intérieur.

3. Agencement d'étanchéité selon l'une des revendications précédentes, dans lequel une épaisseur moyenne (d₁, d₂) de la plaque d'étanchéité est d'au plus 1,5 mm ou d'au plus 1 mm et/ou d'au moins 0,5 mm ou d'au moins 0,6 mm.

4. Agencement d'étanchéité selon l'une des revendications précédentes, dans lequel la section de fixation (11) comprend une zone annulaire (13) qui est conçue pourreposer d'un côté contre une première zone de surface (201) de la partie de stator (200), tandis qu'une seconde zone de surface (202) de la partie de stator, qui est axialement opposée à la première zone de surface (201), est exposée.

5. Agencement d'étanchéité selon la revendication 4, dans lequel la zone annulaire (13) présente une section de surface qui s'étend radialement à l'extérieur de la plaque d'étanchéité (20) dans la direction radiale (R).

6. Agencement d'étanchéité selon l'une des revendications précédentes, dans lequel la plaque d'étanchéité est une première plaque d'étanchéité (20) et l'agencement d'étanchéité comprend au moins une seconde plaque d'étanchéité en forme d'anneau (30), laquelle est soudée au support (10) et dépasse du support dans la direction axiale opposée à la première plaque d'étanchéité.

7. Agencement d'étanchéité selon la revendication 6, dans lequel la première et la seconde plaque d'étanchéité sont soudées sensiblement à la même distance ou à une distance différente d'un axe central du support (10).

8. Agencement d'étanchéité selon l'une des revendications précédentes, dans lequel un bord de la plaque d'étanchéité (20, 30) ou de la première et/ou de la seconde plaque d'étanchéité est soudé
- en étant placé sur une zone de surface sensiblement plane (16) du support,
- en étant attaché à un bord du support qui est disposé radialement vers l'extérieur, ou
- en étant attaché bout à bout à une arête (17) faisant saillie à partir d'une surface de support (18) dans la direction axiale (X).

9. Turbomachine comportant un agencement d'étanchéité (100) selon l'une des revendications précédentes et au moins une partie de stator (200) fixée à la section de fixation (11) du support (10) de l'agencement d'étanchéité.

10. Procédé de fabrication d'un agencement d'étanchéité (100) selon l'une des revendications 1 à 8, comprenant :
- la fabrication du support (10) comprenant une section de fixation (11) destinée à une partie de stator et une zone de maintien (12) destinée à un joint d'étanchéité de fente radiale (40), le support (10) étant fabriqué par rotation, et
- le soudage, au support, de la plaque d'étanchéité (20, 30) ou des plaques d'étanchéité radialement à l'extérieur de la zone de maintien (12), de telle sorte que la ou les plaques d'étanchéité dépassent du support (10) dans la direction axiale (X).
